Europäisches Patentamt

European Patent Office

Office européen des brevets

(19)

(11) Publication number: **0 105 678**

**A1**

(12)

# EUROPEAN PATENT APPLICATION

(21) Application number: **83305658.3**

(22) Date of filing: **23.09.83**

(51) Int. Cl.³: **F 21 V 7/08**
**G 03 B 21/20**

(30) Priority: **29.09.82 GB 8227744**

(43) Date of publication of application:
**18.04.84 Bulletin 84/16**

(84) Designated Contracting States:
**BE DE FR IT**

(71) Applicant: **THE RANK ORGANISATION PLC**
**11 Hill Street**
**London W1X 8AE(GB)**

(72) Inventor: **Weston, Paul**
**76 Bidwell Gardens**
**New Southgate London N11 2AU(GB)**

(72) Inventor: **Legge, Brian**
**76 Elmstead Lane**
**Chiselhurst Kent(GB)**

(74) Representative: **Amann, Hannes Gerhart et al,**
**Central Patent Department The Rank Organisation**
**Limited 439 Godstone Road**
**Whyteleafe Surrey, CR3 OYG(GB)**

(54) **Improvements in or relating to profile spotlights.**

(57) A profile spotlight incorporating a back reflector (10) having a basically elliptical shape with a grid filament (18) transverse to the optical axis at its first focus (12), the reflector (10) having its elliptical shape modified, at one or more selected zones (24) only, so that the light distribution at a gate (22) between the first and second foci is less concentrated at the periphery of the gate than it would be with a reflector wholly of elliptical shape.

Fig.3

-1-

<u>Specification</u>

<u>Improvements in or relating to Profile</u>

<u>Spotlights</u>

This invention relates to a profile spotlight.

A profile spotlight comprises a light collection system coupled to a projection system within a suitable housing.   The projection system comprises a lens or combination of lenses which focus the "gate" of the collection system in order to project this shape forward at a given beam angle or variation of angles governed by the effective focal length of lens or lenses used.

It is important not only to provide as much light as possible from the luminaire but to ensure that the distribution of light across the beam is of a usable pattern.   It is also preferable that this pattern be adjustable between a flat field distribution where an even amount of light is spread over the whole beam width, and a peaked distribution where a concentration of light is provided at the centre of the beam falling off gradually towards the edge of the beam.

The distribution pattern is controlled by the design of the light collection system.   The ideal theoretical arrangement for this system is a reflector taking the form of a surface of revolution defined by an elliptical curve with a theoretical point light source on the first focus of the ellipse.

Present technology, however, does not allow a point source to be used in the system; the available lamps operating at 220/240V for wattages above 500W consist of grid filaments 15mm or more high. Thus the light source extends from the first focus of the ellipse perpendicular to the optical axis by up to ±12.5mm. Each point on the elliptical reflector therefore accepts light from the rectangular grid and reflects this in a diverging beam of rectangular cross-section, the angle of divergence depending on the perpendicular area of grid presented to each point. As the point moves further round the curve from the on-axis centre, so the angle of divergence reduces. Thus the reflector zones near its centre reflect light in a wide cone, whilst annular zones towards the outside of the reflector reflect narrow diverging beams. At the second focus of the elliptical reflector, each of these diverging beams intersects the major axis of the ellipse such that they are substantially symmetrically spaced above and below the axis. At this point an enlarged image of the filament grid is formed, the enlargement or magnification governed by the reflector curve. Ideally, the gate of the collection system would be positioned at this point but this would result in an excessively long spotlight and an excessively large gate diameter.

It is, therefore, more convenient to bring the gate further back towards the reflector. However, at positions nearer the reflector, the narrowly diverging beams from the outside of the reflector, which would have contributed towards the centre of the beam at the second focus, are here concentrated more towards the outside of the total beam. This effect, coupled with the obscuration of reflected light from the centre of the reflector by the filament grid, results in a beam distribution at this revised gate position of a more intense outer ring with a dim centre. This distribution of light in unacceptable in a profile spotlight.

This problem has been partially alleviated hitherto by incorporating a reflector consisting of a large plurality of facets over its entire surface. The

effect of this is to redistribute the light such that an even beam is achieved but, because of its random nature, an unacceptable amount of light is redistributed outside the gate, thus reducing the efficiency of the optical system. In addition, this random redistribution cannot be adjusted to provide a "peaked" distribution.

In addition, various proposals have been made, exemplified by German Specification No. 497270 and U.K. Specifications No. 313338 and No. 1290438, for utilising reflector shapes which depart from a true ellipse. These proposals are intended to solve different problems and are based on the consideration of effects produced by a point source. Such proposals would not improve the light distribution pattern which arises due to use of a grid filament.

It is an object of this invention to provide an improved solution to the above-described problem.

According to the invention, there is provided a profile spotlight which comprises a grid filament, a back reflector having a reflecting surface basically conforming to an ellipse and having the filament positioned at its first focus perpendicular to the reflector axis, a gate positioned between the first and second foci of the ellipse and at which light emanating from the filament is collected by the back reflector, and a lens projection system which is focussed on the gate to project a spotlight beam with a light distribution across the beam corresponding to the light distribution at the gate, characterised in that at least one selected zone of the basically elliptical reflector is modified in shape over a part of its reflecting area to change the light distribution pattern at the gate so that the off-axis peak, produced from a grid filament at the peripheral region of the gate by a true elliptical reflector, is reduced, but without reduction of overall light collection at the gate.

Thus, in accordance with the invention, a part of the reflecting area of the reflector retains its true

-5-

elliptical shape but, in order to achieve improved light distribution across the projected beam, selected zones of the reflecting area, and selected zones only, are modified in shape.

Preferably, the reflector is modified in shape only at one or more outer off-axis zones thereof. This is especially advantageous to increase light collection at and/or towards the central on-axis region of the gate. Alternatively or additionally, the zones of the reflector are modified in shape to diffuse or rearrange the pattern of the grid of the filament.

The selected zone or zones may be modified in shape by means of facets, one or more annular flats or any other convenient deformations which enable the required improvement in the light distribution pattern to be achieved.

In the accompanying drawings:-

Figure 1 diagrammatically illustrates an ideal but practically non-realisable light collection system for a profile spotlight;

Figure 2 diagrammatically illustrates the effect of use of a practical source in the form of a grid filament; and

Figure 3 diagrammatically illustrates a reflector in accordance with the invention.

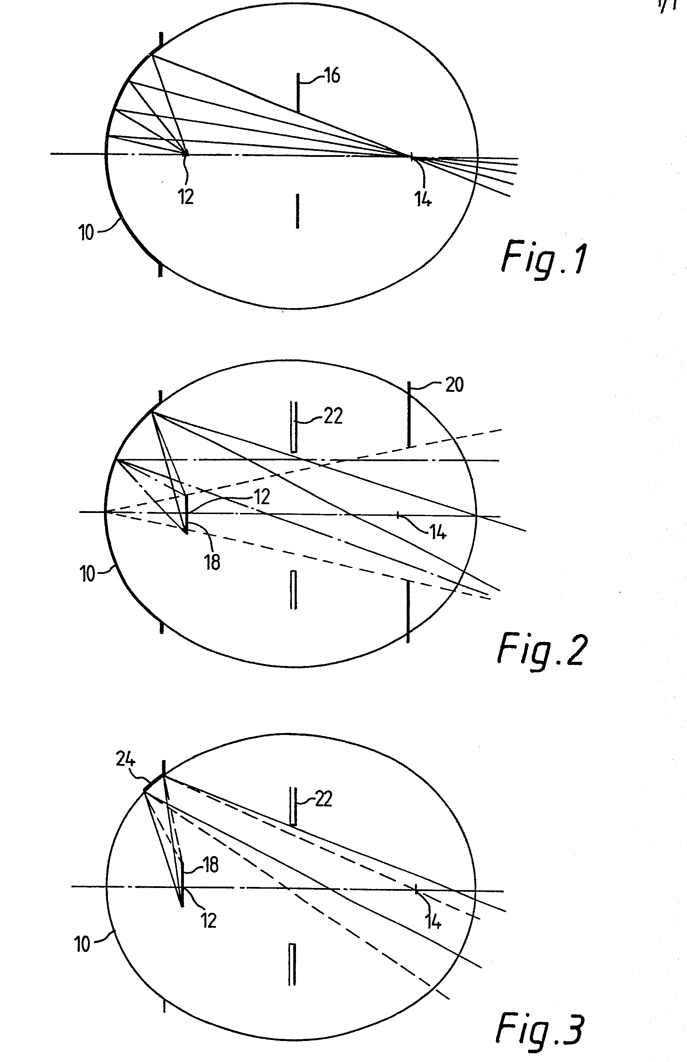

In Figure 1, a true elliptical reflector 10 gathers light from a point source at 12, the first focus of the reflector 10. All the collected light passes through the second focus 14 of the reflector 10. A gate 16, positioned between 12 and 14, contains a light distribution pattern suitable for a profile spotlight.

Figure 2 shows the practical effect of introducing a source in the form of a grid filament 18. At gate position 20, an acceptable light distribution, with concentration peaked towards the centre is obtained. However, gate position 20 is not realisable in practice, which requires that the gate be located at position 22 similar to that of the gate 16 in Figure 1. From Figure 2, it is clear that the light distribution at gate position 22 is unacceptable for a profile spotlight, because concentration is peaked towards the gate periphery.

In accordance with the invention, as exemplified by Figure 3, the elliptical reflector 10 is modified at at least one outer annular region by the formation of an annular flat 24. This causes a spread or shift of light distribution towards the beam centre. Facets or other deformations can be used in place of one or more annular flats at the selected, critical zones of the reflector, and these may at the same time be arranged to diffuse the pattern of the grid filament.

-8-

## Claims

1.    A profile spotlight which comprises a grid filament, a back reflector having a reflecting surface basically conforming to an ellipse and having the filament positioned at its first focus perpendicular to the reflector axis, a gate positioned between the first and second foci of the ellipse and at which light emanating from the filament is collected by the back reflector, and a lens projection system which is focussed on the gate to project a spotlight beam with a light distribution across the beam corresponding to the light distribution at the gate, characterised in that at least one selected zone of the basically elliptical reflector is modified in shape over a part of its reflecting area to change the light distribution pattern at the gate so that the off-axis peak, produced from a grid filament at the peripheral region of the gate by a true elliptical reflector, is reduced, but without reduction of overall light collection at the gate.

2.    A profile spotlight according to claim 1, characterised in that the reflector is modified in shape only at one or more outer off-axis zones thereof.

3.    A profile spotlight according to claim 1 or claim 2, characterised in that zones of the reflector are modified in shape to increase light collection at and/or towards the central on-axis region of the gate.

4.     A profile spotlight according to any of claims 1 to 3, characterised in that zones of the reflector are modified in shape to diffuse or rearrange the pattern of the grid of the filament.

5.     A profile spotlight according to any of claims 1 to 4, characterised in that selected zones of the reflector are facetted.

6.     A profile spotlight according to any of claims 1 to 4, characterised in that at least one selected zone of the reflector is formed with annular flats.

Fig.1

Fig.2

Fig.3

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | GB-A-1 290 438  (C.C.T.)<br>* Whole document * | 1,2,5 | F 21 V     7/08<br>G 03 B    21/20 |
| D,A | GB-A-  313 338  (EMIL BUSCH)<br>* Page 2, lines 14-18 * | 1,3 | |
| D,A | DE-C-  497 270  (EMIL BUSCH)<br>* Page 2, lines 28-30 * | 1,3 | |

TECHNICAL FIELDS
SEARCHED (Int. Cl. 3)

F 21 V
G 03 B
F 21 M
F 21 P

The present search report has been drawn up for all claims

| Place of search | Date of completion of the search | Examiner |
|---|---|---|
| THE HAGUE | 04-01-1984 | FOUCRAY R.B.F. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
& : member of the same patent family, corresponding
document

EPO Form 1503. 03.82